# EUROPÄISCHE PATENTANMELDUNG

(11) **EP 0 897 063 A2**
(43) Veröffentlichungstag der Anmeldung: **17.02.1999**
(21) Anmeldenummer: 98119454.1
(22) Anmeldetag: 15.10.1998
(51) Int. Cl.: F04C 2/14, F04C 13/00, F04C 2/08

(54) **Vorrichtung zum Fördern von elastomerem Medium**

(71) Anmelder: Maag Pump Systems Textron AG, 8023 Zürich (CH)
(72) Erfinder: Schiesser, Walter A., 8302 Kloten (CH); Werhonig, Hermann, 8907 Wettswil (CH); Wyrsch, Martin, 5600 Lenzburg (CH); Lussi, Gerhard, 8712 Stäfa (CH)
(74) Vertreter: Troesch Scheidegger Werner AG

(57) **Zusammenfassung**

Die Erfindung betrifft eine Vorrichtung bestehend aus einer Zahnradpumpe (10) und einer vor dieser angeordneten Füttereinheit (11), die aus mindestens einer Einzugswalze (4) besteht, welche unabhängig von der Zahnradpumpe (10) angetrieben ist. Erfindungsgemäss ist das Drehmoment mindestens einer Einzugswalze (4) zur Erlangung eines vorgebbaren Druckes zwischen Füttereinheit (11) und Zahnradpumpe (10) einstellbar.

## Beschreibung

Die vorliegende Erfindung betrifft eine Vorrichtung nach dem Oberbegriff des Patentanspruchs 1 sowie eine Verwendung derselben.

Zahnradpumpen werden vielfach zum Fördern von Chemikalien und Polymeren insbesondere dann verwendet, wenn hohe Austrittsdrucke und deren präzise Einhaltung gewünscht werden.

Beim Einsatz von Zahnradpumpen zur Förderung von Elastomeren, d.h. Gummimischungen, ergeben sich jedoch Schwierigkeiten. So ist die Leistung ohne gute Materialzufuhr mit einem bestimmten Druck weit unter dem von der Zahnradpumpe gegebenen Optimum und/oder das aus der Zahnradpumpe austretende Fördermedium weist Lufteinschlüsse auf.

Gemäss der in der Druckschrift EP-0 492 425 beschriebenen Lehre ist es bekannt, eine vollständige Füllung der Zahnlücke mit Hilfe eines Extruders (Schneckenpresse) zu erreichen. Damit kann einerseits die Austrittskapazität der Zahnradpumpe bei gleichen Drehzahlen stark erhöht werden und anderseits das Fördermedium besser austreten als wenn keine Zahnradpumpe eingesetzt wird. Die Verwendung eines Extruders für die Materialspeisung einer Zahnradpumpe ist aber sehr kostenintensiv und kaum verantwortbar.

Eine andere Lösung wurde in der Druckschrift DE-196 47 904 beschrieben. Diese bekannte Lehre bezieht sich insbesondere auf eine Streifen-Einzugsvorrichtung vor einer Zahnradpumpe, wobei jedem Zahnrad der Zahnradpumpe eine Einzugswalze zugeordnet ist. Dies setzt aber genau dimensionierte Materialstreifen des Fördermediums voraus, um eine Unterfütterung, was Lufteinzug zur Folge hat, oder Überfütterung, was ein Rückstau zur Folge hat, zu vermeiden. Demzufolge ist der Einsatzbereich solcher Anlagen stark begrenzt.

Schliesslich ist es bekannt, zur Vermeidung von Lufteinschlüssen Vakuumpumpen zu verwenden, die Luftblasen im Fördermedium vor der Zahnradpumpe entfernen. Solche Anlagen sind kostenintensiv und aufgrund von zusätzlichen Systemkomponenten entsprechend störanfällig.

Der vorliegenden Erfindung liegt daher die Aufgabe zugrunde, eine Vorrichtung anzugeben, die obenerwähnte Nachteile nicht aufweist.

Diese Aufgabe wird durch die im kennzeichnenden Teil des Patentanspruchs 1 angegebenen Massnahmen gelöst. Vorteilhafte Ausgestaltungen der Erfindung sowie eine Verwendung sind in weiteren Ansprüchen angegeben.

Die erfindungsgemässe Vorrichtung ist äusserst kostengünstig und hat sich im Betrieb als zuverlässige Fördervorrichtung erwiesen, bei der sowohl ein Überfüttern als auch ein Unterfüttern der Zahnräder der Zahnradpumpe vermieden wird. Darüber hinaus können auch ohne die Verwendung von Vakuumpumpen blasenfreie Produkte erhalten werden.

Die Erfindung wird nachfolgend anhand von Zeichnungen beispielsweise näher erläutert. Dabei zeigen
- Fig. 1: einen Schnitt durch eine erfindungsgemässe Vorrichtung in schematischer Darstellung,
- Fig. 2: einen Schnitt durch zwei Zwischenelemente zwischen Zahnradpumpe und Füttereinheit und
- Fig. 3: eine weitere Ausführungsform zur Fixierung der Zwischenelemente.

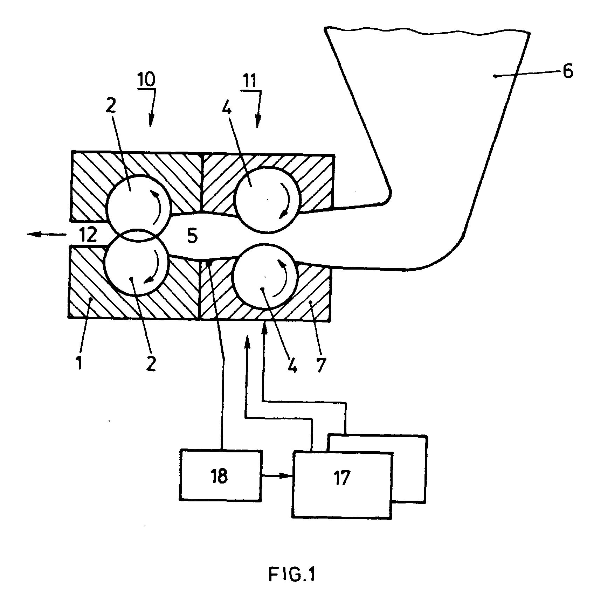

Fig. 1 zeigt einen Schnitt durch eine schematisch dargestellte erfindungsgemässe Vorrichtung bestehend aus einer Zahnradpumpe 10, einer Füttereinheit 11 und einem Fülltrichter 6.

Im Fülltrichter 6 ist das Fördermedium, beispielsweise in Form von Granulat oder Pulver, enthalten, das durch die Schwerkraft und/oder mit einer Förderschnecke (in Fig. 1 nicht dargestellt) in Richtung Füttereinheit 11 gepresst wird.

Die Füttereinheit 11 weist zwei berührungsfreie Einzugswalzen 4 in einem Gehäuse 7 auf. Der Abstand der beiden Einzugswalzen 4 ist in Abhängigkeit des Fördermediums bzw. dessen Eigenschaften bzw. in Abhängigkeit des Druckes am Ausgang der Füttereinheit 11 einstellbar.

Die Zahnradpumpe 10 ist in Förderrichtung gesehen nach der Füttereinheit 11 angeordnet und besteht in bekannter Weise aus zwei ineinandergreifenden Zahnrädern 2, die in einem Pumpengehäuse 1 enthalten sind und die das Fördermedium von der sogenannten Saugseite 5 auf die Druckseite 12 in den Zahnlücken transportieren.

Bei der in Fig. 1 dargestellten Ausführungsform wird das Fördermedium mit Hilfe der zwei Einzugswalzen 4 auf die Saugseite 5 der Zahnradpumpe 10 und von dort in die Zahnlücken der Zahnräder 2 gefördert. Die Drehgeschwindigkeit der Einzugswalzen 4 ist dabei unabhängig von der Drehgeschwindigkeit der Zahnräder 2 der Zahnradpumpe 10 einstellbar bzw. stellt sich in selbstregelnder Weise unabhängig von der Drehgeschwindigkeit der Zahnräder 2 ein. Bei der Erzeugung und Aufrechterhaltung eines notwendigen Fülldruckes auf der Saugseite 5 der Zahnradpumpe 10 ist das Drehmoment der Einzugswalzen 4 massgebend. Daher wird vorzugsweise mit Hilfe einer Messeinheit 18, die den Druck auf der Saugseite 5 misst, der Fülldruck gemessen und das Signal vorzugsweise zwei Antriebseinheiten 17 zugeführt. Jede dieser Antriebseinheiten 17 erzeugt ein Drehmoment der jeweiligen Einzugswalze 4, wodurch ein entsprechender Fülldruck auf der Saugseite 5 resultiert.

In einer bevorzugten Ausführungsform der Erfindung bestehen die Antriebseinheiten 17 aus hydrostatischen Aggregaten. Diese eignen sich aufgrund ihrer Drehmoment-erhaltenden Eigenschaften bei der erfindungsgemässen Vorrichtung vorzüglich. So kann bei Verwendung von hydrostatischen Aggregaten die in der Fig. 1 dargestellte Zuführung des gemessenen Druckes an die Antriebseinheiten 17 weggelassen werden, da die Drehmomente der Einzugswalzen 4 selbständig reguliert werden. Daher ist beispielsweise das Anzeigen des gemessenen Druckes auf der Saugseite 5 der Zahnradpumpe 10 zu Kontrollzwecken und manuellen Einstellung der Drehmomente - und somit des Fülldruckes - durch Betriebspersonal ausreichend.

Denkbar ist jedoch auch der Einsatz von Antriebseinheiten 17 auf der Basis von Elektromotoren oder dgl. Bei solchen Ausführungsformen sind allerdings Regeleinheiten erforderlich, die einen geschlossenen Regelkreis zur Stabilisierung der Drehmomente aufweisen. Bei diesen Ausführungsformen wird der gemessene Druck auf der Saugseite 5 der Zahnradpumpe 10 den Antriebseinheiten 17 zugeführt, wie dies in Fig. 1 dargestellt ist.

Die Einzugswalzen 4 bewegen sich im Einzugsspalt in Förderrichtung des Fördermediums, wie dies mit den Pfeilen bei den in Fig. 1 dargestellten Einzugswalzen 4 angegeben ist. Der auf der Saugseite 5 entstehende Druck im Fördermedium bewirkt bei idealer Einstellung, dass die Zahnlücken der Zahnradpumpe 10 vollständig gefüllt werden.

Ist der Druck auf der Saugseite 5 zu hoch, so ist zur Vermeidung einer Überfütterung der Zahnlücken das Drehmoment der Einzugswalzen 4 zu reduzieren. Bei zu niedrigem Druck auf der Saugseite 5 ist das Drehmoment entsprechend zu erhöhen.

Bei einer Ausführungsform der erfindungsgemässen Vorrichtung, bei der anstelle von Granulat oder Pulver Streifenmaterial zugeführt wird, entfällt der Fülltrichter 6. Das Streifenmaterial (sogenannter Mischungsbänder) wird von den zwei Einzugswalzen 4 selbständig eingezogen.

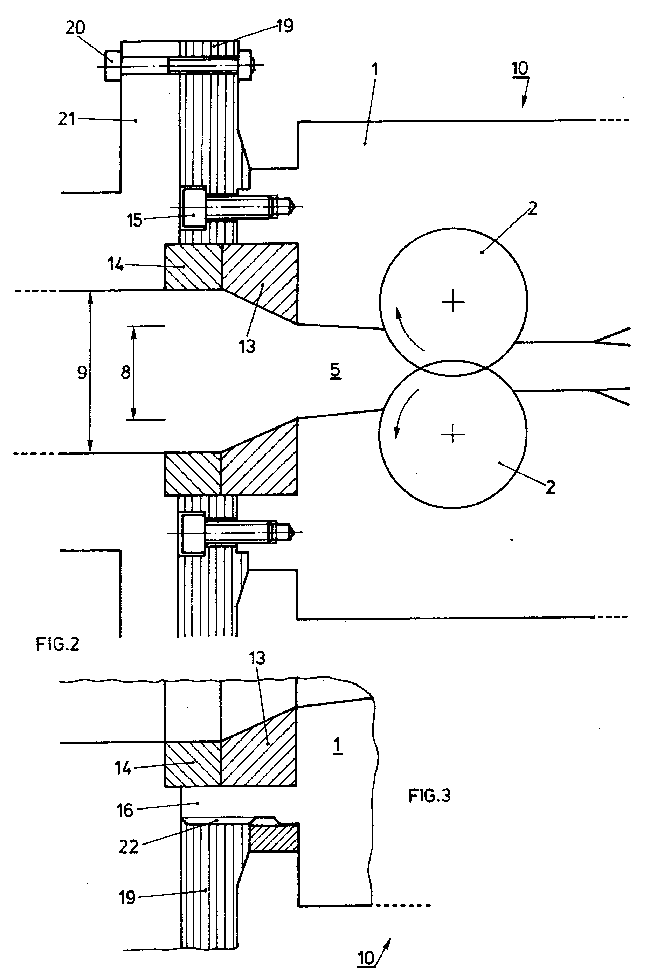

Fig. 2 zeigt eine weitere erfindungsgemässe Vorrichtung, die sowohl in Kombination mit der anhand Fig. 1 erläuterten erfindungsgemässen Vorrichtung als auch unabhängig von dieser eingesetzt werden kann.

Zahnradpumpen werden oft zwischen Mixern oder Extrudern und Extrusions- oder sonstigen z. B. Schmelztransformationswerkzeugen, aber auch Granulierungswerkzeugen eingesetzt. Aufgrund unterschiedlichster Anforderungen seitens der Fördermedien haben sich keine universellen Flanschabmessungen herausbilden können, so dass notgedrungen eine grosse Vielfalt hinsichtlich der Flanschgeometrien und Flanschverbindungen existiert.

Zahnradpumpen werden für die ganze Breite der Fördergutvielfalt eingesetzt (Polymerschmelzen mit und ohne Füllstoffen, Kautschukmischungen, Schweröle und andere hochviskose Stoffe), so dass in grossem Masse die Gehäuseflanschgeometrien variieren müssen.

Diesem Nachteil wird erfindungsgemäss mit einem standardisierten Pumpenanschluss begegnet, an welchen sich ein Flansch anschliesst, der durch frei wählbare Füllstücke - im folgenden auch Zwischenelemente genannt - gekennzeichnet ist. Hiermit ist es möglich, die Fliesskanalquerschnitte in breitem Masse an die der Zahnradpumpe anzupassen und dabei besondere Anforderungen zu erfüllen: So kann beispielsweise bei Kautschuk als Fördermedium die Kegeligkeit des Zwischenelementes derart gewählt werden, dass in beliebigem Zustand befindliches Fördermedium spielend entnommen werden kann. Darüber hinaus kann das Zwischenelement bzw. eines der Zwischenelemente einen Siebeinsatz oder einen Filter zum Schutz der Zahnradpumpe aufweisen. Schliesslich besteht auch die Möglichkeit, das Zwischenelement bzw. eines der Zwischenelemente als Vergleichmässigungselement zum Spannungsabbau eingebrachter, deformationsbedingter Spannungen im Fördermedium, als Mischelement, als sogenannte "Breaker Plate" oder als Zentrierungsring auszubilden.

Die Erfindung vereinfacht bzw. ermöglicht insbesondere den Einbau der Zahnradpumpe in vorhandene Anlagen, indem von dem Nutzen der Anpassungsfähigkeit an vorhandene massliche Gegebenheiten profitiert wird.

Während das pumpenseitige Flanschende stets gleich ist - und somit eine Gehäuseanpassung vermieden wird -, kann die Anschlussseite zum vorgelagerten - z.B. Extruder, Füttereinheit, etc. - und nachgeschalteten Anlagenelement - z.B. Werkzeug, etc. - variiert werden.

Ein weiterer Aspekt der Erfindung ist das Zentrieren der über ein Zwischelement verbundenen Anlagenkomponenten, denn solche Zwischenelemente ermöglichen eine gewisse Korrektur von allfällig vorhandenen ungewollten Ungenauigkeiten.

Schliesslich besteht eine weitere Ausführungsform des erfindungsgemässen Zwischenelementes darin, dass dieses als Schnellverbindungselement ausgestaltet ist, womit ein schnelles Entkoppeln einzelner Anlagekomponenten ermöglicht wird.

In Fig. 2 ist eine Zahnradpumpe 10 dargestellt, die aus einem Pumpengehäuse 1, zwei ineinandergreifenden Zahnrädern 2, einer Einlauföffnung auf der Saugseite 5 und einer Auslauföffnung auf der Druckseite besteht. Auf der Saugseite 5 der Zahnradpumpe 10 sind zwei Zwischenelemente 13 und 14 vorgesehen, die mit Hilfe eines Flansches 19 unter Verwendung von Befestigungselementen 15 mit dem Pumpengehause 1 fixierbar sind, wobei in einer bevorzugten Ausführungsform die Befestigungselemente 15 Schrauben sind.

In der bevorzugten Ausführungsform gemäss Fig. 2 sind zwei Zwischenelemente 13 und 14 vorgesehen, wobei das Zwischenelement 13 eine geometrische Anpassung vom Durchmesser 9 eines weiteren Anlageelementes 21 auf einen Einlaufdurchmesser 8 auf der Saugseite 5 der Zahnradpumpe 10 unter Berücksichtigung von strömungstechnischen Gesichtspunkten vornimmt und das Zwischenelement 14 aus einem Filterelement besteht, das einen Eintritt von allenfalls im Fördermedium vorhandenen grösseren Partikeln in die Zahnradpumpe 10 verhindern soll.

Das weitere Anlageelement 21 ist mit Hilfe von Befestigungselementen 20, die beispielsweise aus Schrauben bestehen, mit dem Flansch 19 verbindbar. In der dargestellten Ausführungsform ist der Flansch 19 lediglich zur Verbindung mit einem weiteren Anlageelement 21 vorgesehen. Denkbar ist jedoch auch, dass die Zwischenelemente 13 und 14 durch den Flansch in der gewünschten Position gehalten werden und auch dort verbleiben, wenn das Anlageelement 21 entfernt wird.

Schliesslich ist in einer weiteren Ausführung vorgesehen, mindestens eines der Zwischenelemente 13 oder 14 als Flansch auszubilden, an welches das weitere Anlageelement befestigt ist.

Es wird nochmals darauf hingewiesen, dass mit Hilfe der erfindungsgemässen Vorrichtung unterschiedlich ausgelegte Anlagekomponenten kombiniert werden können. Für die geometrische Anpassung ist lediglich ein Zwischenelement erforderlich. Damit kann die Teilevielfalt bei Zahnradpumpen erheblich reduziert und somit die Anlagekosten reduziert werden. Schliesslich besteht bei den erfindungsgemässen Zwischenelementen 13 und 14 die Möglichkeit, eine andere Oberflächenschicht, beispielsweise durch ein Coating, vorzusehen, um die Strömung des Fördermediums in diesem strömungstechnisch anspruchsvollen Bereich weiter zu optimieren. Für die Oberflächenschichten kommen dabei insbesondere Teflon oder Chromoxid zur Anwendung.

In Fig. 3 ist eine weitere Ausführungsform der erfindungsgemässen Vorrichtung gemäss Fig. 2 dargestellt, wobei bei dieser Ausführungsform der Flansch 19 ein Gewinde 22 aufweist, das in ein entsprechendes Gegengewinde in einem Fortsatz 16 des Pumpengehäuses 1 eingreift. Das weitere Anlageelement 21 wird gemäss den Ausführungen zu Fig. 2 mit dem Flansch 19 verbunden.

## Patentansprüche

1. Vorrichtung bestehend aus einer Zahnradpumpe (10) und einer in Förderrichtung gesehen vor dieser angeordneten Füttereinheit (11), dadurch gekennzeichnet, dass die Füttereinheit (11) aus mindestens einer Einzugswalze (4) besteht, welche unabhängig von der Zahnradpumpe (10) angetrieben ist, wobei das Drehmoment der mindestens einen Einzugswalze (4) zur Erlangung eines vorgebbaren Druckes zwischen der Füttereinheit (11) und der Zahnradpumpe (10) einstellbar ist.

2. Vorrichtung nach Anspruch 1, dadurch gekennzeichnet, dass mindestens zwei Einzugswalzen (4) vorgesehen sind, wobei die Einzugswalzen (4) gegenläufig angetrieben sind und zwischen sich einen Einzugsspalt bilden.

3. Vorrichtung nach Anspruch 1 oder 2, dadurch gekennzeichnet, dass zum Antrieb der Einzugswalzen (4) mindestens eine Antriebseinheit (17), vorzugsweise mindestens ein hydrostatisches Antriebsaggregat, vorgesehen ist.

4. Vorrichtung nach einem der vorangehenden Ansprüche, dadurch gekennzeichnet, dass auf der Saugseite (5) der Zahnradpumpe (10) eine Messeinheit (18) zur Ermittlung des Fördermediumdruckes vorgesehen ist, auf Grund dessen die Drehmomente der Einzugswalzen (4) einstellbar sind.

5. Vorrichtung nach einem der vorangehenden Ansprüche, dadurch gekennzeichnet, dass mindestens eine der Einzugswalzen (4) eine glatte oder eine profilierte Oberfläche aufweist.

6. Vorrichtung, insbesondere nach einem der vorangehenden Ansprüche, dadurch gekennzeichnet, dass mindestens eine weitere Anlagekomponente über mindestens ein Zwischenelement (13, 14) mit einer Zahnradpumpe (10) verbindbar ist.

7. Vorrichtung nach Anspruch 6, dadurch gekennzeichnet, dass mindestens ein Zwischenelement (13, 14) strömungstechnisch optimiert ausgelegt ist.

8. Vorrichtung nach Anspruch 6 oder 7, dadurch gekennzeichnet, dass mindestens ein Zwischenelement (13, 14) ein Filter, eine Mischeinheit und/oder ein Entspannungselement ist.

9. Vorrichtung nach einem der Ansprüche 6 bis 8, dadurch gekennzeichnet, dass das Zwischenelement bzw. die Zwischenelemente (13, 14) über einen Flansch (14) mit Hilfe von Befestigungselementen (15), vorzugsweise Schrauben, am Pumpengehäuse (1) fixierbar sind.

10. Vorrichtung nach einem der Ansprüche 6 bis 8, dadurch gekennzeichnet, dass das Zwischenelement bzw. die Zwischenelemente (13, 14) über ein ein Gewinde (22) aufweisendes Befestigungselement (20) mit dem Pumpengehäuse (1) verbindbar sind.

11. Vorrichtung nach einem der Ansprüche 6 bis 10, dadurch gekennzeichnet, dass mindestens ein Zwischenelement (13, 14) eine Oberflächenschicht aus Teflon oder Chromoxid aufweist.

12. Verwendung der Vorrichtung nach einem der Ansprüche 1 bis 11 zur Förderung von Elastomeren, insbesondere zur Förderung von Gummimischungen und anderen hochviskosen Fördermedien.
